# EUROPEAN PATENT APPLICATION

(11) **EP 1 736 873 A2**
(43) Date of publication of application: **27.12.2006**
(21) Application number: 06114873.0
(22) Date of filing: 01.06.2006
(51) Int. Cl.: G06F 9/445

(54) **Apparatus for providing applications according to users' preferences and method for the same**

(30) Priority: 09.06.2005 KR 2005049450
(71) Applicant: Samsung Electronics Co., Ltd., Suwon-si 442-742 Gyeonggi-Do (KR)
(72) Inventor: KIM, Jung-jin, Gyeonggi-do, (KR)
(74) Representative: Robinson, Ian Michael

(57) **Abstract**

An apparatus and method are provided for providing applications according to users' preferences. The apparatus includes a receiving unit (310), a memory unit (340), and an application control unit (334). The receiving unit receives a plurality of applications having different features. The memory unit (340) stores information about a user's preferences of features preset by the user. The application control unit (334) selects an application, having features corresponding to the information about the user's preferences, from the plurality of applications, and executes the selected application.

## Description

Apparatuses and methods consistent with the present invention relate to providing applications according to users' preferences and a method for the same.

For storage media playing systems such as broadcasting systems and digital versatile disc (DVD) players, various applications are installed therein to be provided to users. Applications typically include, but are not limited to games, document programs, and advertisement programs.

As such, it is often necessary to execute the same application in different manners according to users' preferences.

For example, when a specific game application is implemented using various languages and is provided as a service, some users are allowed to view the game application in English and other users are allowed to view the game application in Korean. In this case, applications in respective languages, such as a Korean version and an English version of the same game application are simultaneously implemented, and a list of applications in different languages is provided to a user, so that the user can select a desired language version of the game to be played.

In this case, the applications have the same construction, and a list of the applications in different languages is provided to the user to be selected. Hence, there is a drawback in that users are often subjected to the inconvenience of selecting an application having desired features from a list of numerous applications.

Further, since different versions of the same application which only differ in small features are loaded into memory, system resources are inefficiently utilized.

According to the present invention there is provided an apparatus and method as set forth in the appended claims. Preferred features of the invention will be apparent from the dependent claims, and the description which follows.

The present invention has been made in view of the above problems in the prior art, and an aspect of the present invention is to provide an apparatus for providing applications, which allows corresponding applications to be automatically executed according to users' preset preference information, and a method for the same.

In order to accomplish the above aspect, the present invention provides an apparatus for providing applications, including a receiving unit for receiving a plurality of applications having different features; a memory unit for storing information about a user's preferences of features preset by the user; and an application control unit for selecting an application, having features corresponding to the information about the user's preferences, from the plurality of applications, and for executing the selected application.

In addition, in order to accomplish the above aspect, the present invention provides a method for providing applications, including the operations of receiving a plurality of applications having different features; extracting information about a user's preferences preset by the user; selecting an application, having features corresponding to the extracted information about the user's preferences, from the plurality of received applications; and executing the selected application.

The above and other aspects, features and advantages of the present invention will be more clearly understood from the following detailed description taken in conjunction with the accompanying drawings, in which:

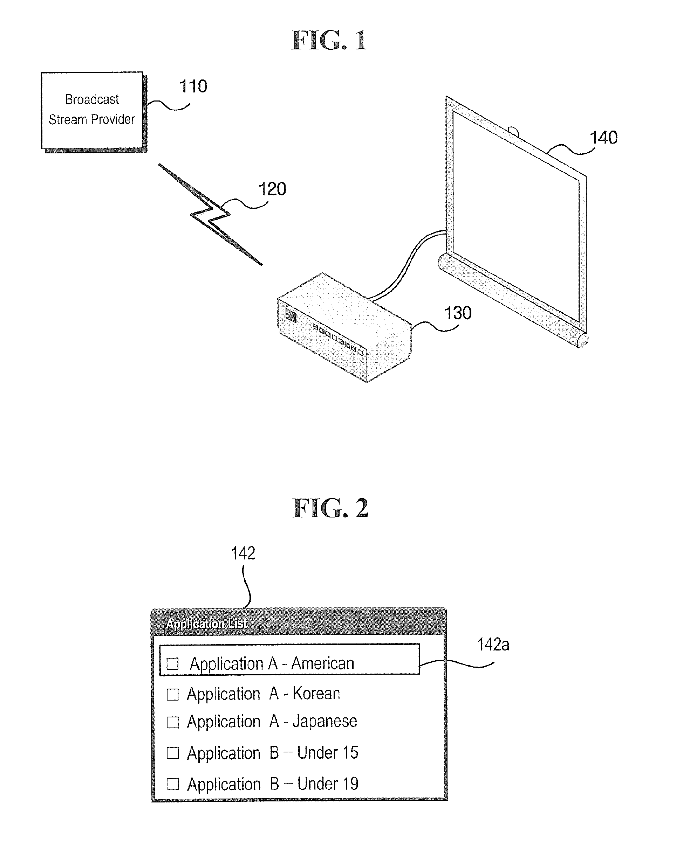

Figure 1 is a diagram showing an example of a conventional system for executing applications contained in a broadcast stream;
Figure 2 is a diagram showing an example of a conventional user interface provided to allow a user to select a desired application;
Figure 3 is a block diagram of an apparatus for providing applications according to an embodiment of the present invention;
Figures 4A to 4C are diagrams showing examples of user interfaces for setting information about a user's preferences according to an embodiment of the present invention;
Figures 5A to 5C are diagrams showing examples of information about a user's preferences according to an embodiment of the present invention; and
Figure 6 is a flowchart illustrating a method of providing applications according to an embodiment of the present invention.

The advantages and characteristics of the present invention, and a method of achieving them, will be apparent with reference to embodiments described in detail below in conjunction with accompanying drawings. However, the present invention is not limited to the embodiments disclosed below, but may be implemented in various ways. Furthermore, the embodiments are provided to complete the disclosure of the present invention, and to fully notify those skilled in the art of the scope of the present invention. The present invention is defined only by the appended claims.

Descriptions of the present invention are made below with reference to drawings in conjunction with block diagrams or flowcharts illustrating an apparatus for proving applications and a method for the same. In this case, it will be understood that each block of the flowchart illustrations, and combinations of blocks in the flowchart illustrations, can be implemented using computer program commands. These computer program commands can be provided to a processor of a general-purpose computer, a special purpose computer, or other programmable data processing apparatus to produce a machine, such that the commands, which are executed on the processor of the computer or other programmable data process apparatus, implements the operations specified in the flowchart block or blocks. These computer program commands may also be stored in computer-usable or computer-readable memory that can direct a computer or other programmable data processing apparatus to function in a particular manner, such that the commands, which are stored in the computer-usable or computer-readable memory, enable the production of a product that implements the operations specified in the flowchart block or blocks. The computer program commands may also be loaded onto a computer or other programmable data processing apparatus to cause a series of operations to be performed on the computer or other programmable apparatus to produce a computer-implemented process so that the commands that are executed on the computer or other programmable apparatus provide operations for implementing the functions specified in the flowchart block or blocks. Furthermore, each block in the flowchart illustrations may represent a module, segment, or portion of code, which comprises one or more executable commands for implementing the specified logical function(s). It should also be noted that in some alternative implementations, the functions noted in the blocks may occur in a different order. For example, two blocks shown in succession may in fact be executed concurrently or may sometimes be executed in reverse order, depending upon the desired functionality.

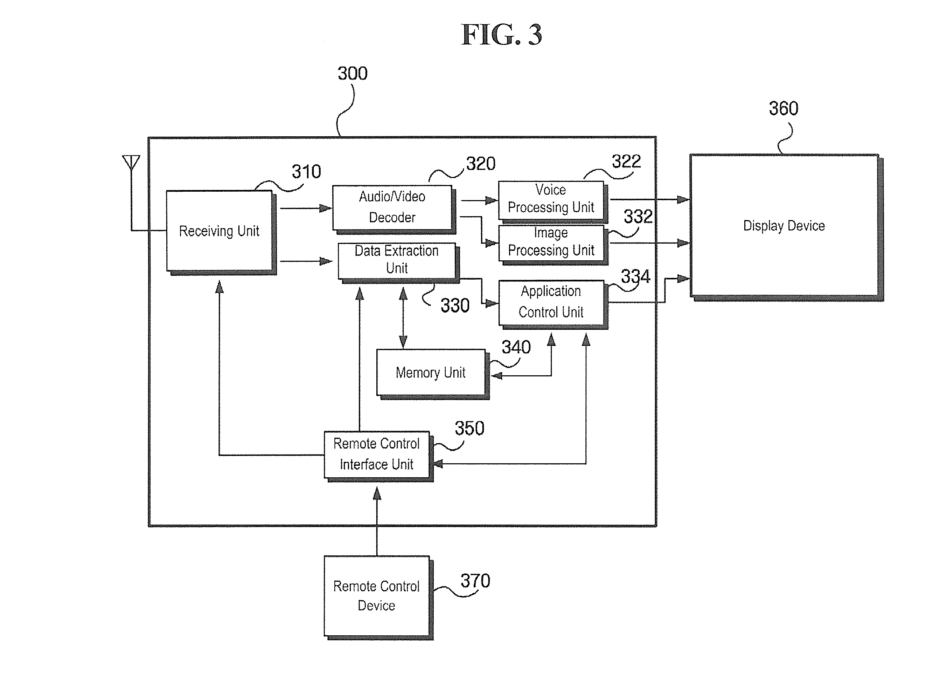

Figure 3 is a block diagram of an apparatus for providing applications according to an embodiment of the present invention.

As shown in Figure 3, the apparatus 300 for providing applications according to an embodiment of the present invention includes a receiving unit 310, an audio/video decoder 320, a data extraction unit 330, a voice processing unit 322, an image processing unit 332, an application control unit 334, a memory unit 340, and a remote control interface unit 350.

The apparatus 300 for providing applications further includes a digital broadcasting receiver, such as a set-top box.

Meanwhile, the term 'module', as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and may be configured to be executed on one or more processors. Thus, a module may include, by way of example, components, such as software components, object-oriented software components, class components and task components, processes, functions, features, procedures, subroutines, segments of program code, drivers, firmware, microcode, circuitry, data, databases, data structures, tables, arrays, and variables. The functionality may be provided by the components and modules combined into fewer components and modules or further separated into additional components and modules. Furthermore, the components and modules may be implemented to operate one or more Central Processing Units (CPUs) residing in a device or a security multimedia card.

The receiving unit 310, which receives broadcast streams through an antenna, includes a tuner, a demodulation unit, and a demultiplexing unit.

The tuner is tuned to the reception frequency range of a channel selected by a user, converts a received signal wave into an Intermediate Frequency (IF) signal, and provides the converted signal to the demodulation unit. The demodulation unit demodulates a digital signal provided from the tuner and, therefore, provides data, having a Moving Picture Experts Group (MPEG)-2 transmission stream form, to the demultiplexing unit. The demultiplexing unit then divides an input broadcast stream into compressed voice data, compressed image data, and service information, and provides the divided data and information to the audio/video decoder 320 and to the data extraction unit 330.

The audio/video decoder 320 decodes the input voice data, generates program voice data, and provides the generated data to the voice processing unit 322. The voice processing unit 322 performs predetermined voice signal processing on the input voice data and then outputs voice. For example, the voice processing unit 322 outputs voice to a display device 360, such as a digital television (TV) that includes a speaker.

Furthermore, the audio/video decoder 320 decodes the image data, generates program image data, and provides the generated data to the image processing unit 332. The image processing unit 332 generates an image by performing predetermined processing on the input program image data, and then outputs the generated image to the display device 360. Furthermore, the image processing unit 332 has a function of overlapping character information to a program image that is displayed on the display screen of a TV.

The data extraction unit 330 operates in response to a control signal received from the remote control interface unit 350, extracts a plurality of applications, having different features, from service information provided from the demultiplexing unit of the receiving unit 310, and then transfers the extracted applications to the application control unit 334.

In this case, information about the features of a single application may have the following data structure:

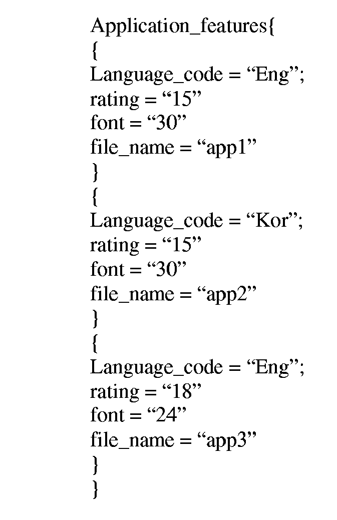

That is, the above-described example indicates that an application is provided in a form of three types of applications having different features. In this case, the term 'Language_code' indicates a language provided when an application is executed, the term 'rating' indicates information about the age of a user appropriate for the application, the term 'font' indicates information about the size of characters provided when the application is executed, and the term 'file_name' indicates application file name to be executed when all individual information about the corresponding application are satisfied.

For example,

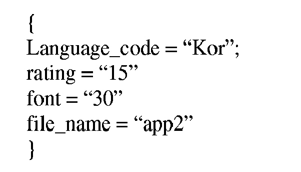

The above-described information about the features of an application represents that the version of an application is Korean, the age of a user appropriate for the application is under fifteen, and the size of characters to be provided for the application is 30 point. When information about the user's preferences is the same as the information about the features of the application, the application, having the file "app2," is executed.

The above-described information about the features of the application may be transferred to the application control unit 334 through the receiving unit 310 and the data extraction unit 330 of the application provision apparatus 300 while being carried on conventional Application Information Table (AIT) information that is contained in a broadcast stream. For example, in the case where the data structure of the AIT information is as follows: 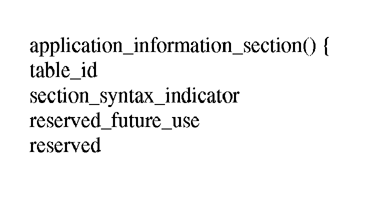 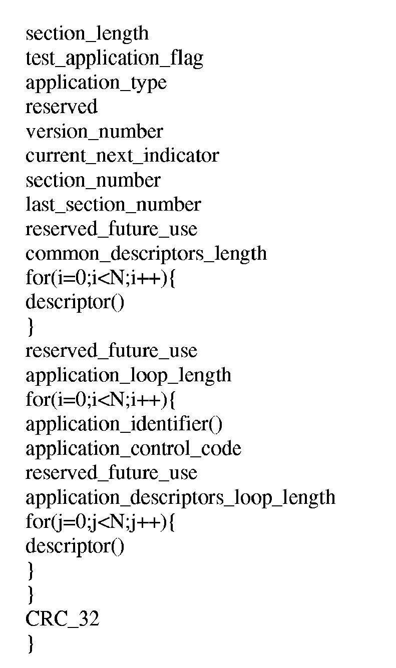 information about 'Language_code' , 'rating', and 'font' can be set in the descriptor().

The memory unit 340 stores programs, which are necessary to determine and initialize the application provision apparatus 300, and information about the user's preferences previously set by a user. In this case, information about the user's preferences, which is information about the features of various applications received by the application provision apparatus 300, includes information about the age of a user appropriate for an application, information about the gender of a user appropriate for the application, information about the size of characters provided when the application is executed, and information about the languages provided when the application is executed.

Furthermore, the memory unit 340 may store an application filtered out according to the information about a user's preferences.

The memory unit 340 may be implemented using nonvolatile memory, such as cache memory, Read-Only Memory (ROM), Programmable Read-Only Memory (PROM), Erasable Programmable Read-Only Memory (EPROM), Electrically Erasable Programmable Read-only Memory (EEPROM), Synchronous Dynamic Random Access Memory (SDRAM), and flash memory, or volatile memory, such as Random Access Memory (RAM), but is not limited to these memory devices.

The application control unit 334 selects an application, having features that correspond to information about the user's preferences stored in the memory unit 340, from the plurality of applications extracted by the data extraction unit 330, executes the selected application, and allows the executed application to be provided to a user through the display device 360.

That is, the application control unit 334 extracts information about the user's preferences previously stored in the memory unit 340, and compares the extracted information about the user's preferences with information about applications, which are extracted by the data extraction unit 330. Thereafter, in the case where an application corresponding to the information about the user's preferences exists, the application control unit 334 selects only an application that corresponds to information about the user's preferences, and executes the selected application or stores it in the memory unit 340.

The application stored in the memory unit 340 may be loaded and executed according to a user's command provided through a remote control device 370. That is, not all the applications are stored in the memory unit 340, but only the application, which is selected based on the information about the user's preferences, is stored therein, so that the limited system resources can be prevented from being unnecessarily utilized.

The remote control interface unit 350 receives remote control signals from the remote control device 370, such as a remote controller, and provides the received signal to the application control unit 334. For example, in the case where a remote control signal indicating the execution of applications is received from the remote control device 370, the remote control interface unit 350 provides an application execution command signal to the application control unit 334, and the application control unit 334 loads and executes the application, which is stored in the memory unit 340, in response to the command.

Furthermore, the remote control interface unit 350 controls the internal components of the apparatus 300 in response to the user's command. For example, in the case where a user designates a specific channel using a remote controller, the remote control interface unit 350 sends a command for tuning the received broadcast stream with the frequency of the channel designated by the user to the tuner of the receiving unit 310. The image processing unit 332 outputs the program image data, which is provided from the audio/video decoder 320, to the display device 360.

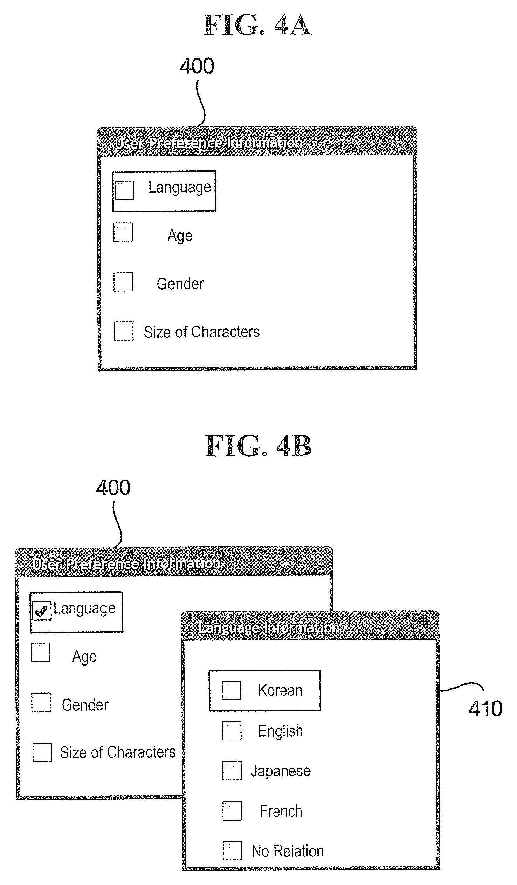

Figures 4A to 4C are diagrams showing examples of user interfaces for setting information based on a user's preferences, according to an embodiment of the present invention. The user interface may be provided to a user through a display device (not shown) connected to the apparatus 300 shown in Figure 3.

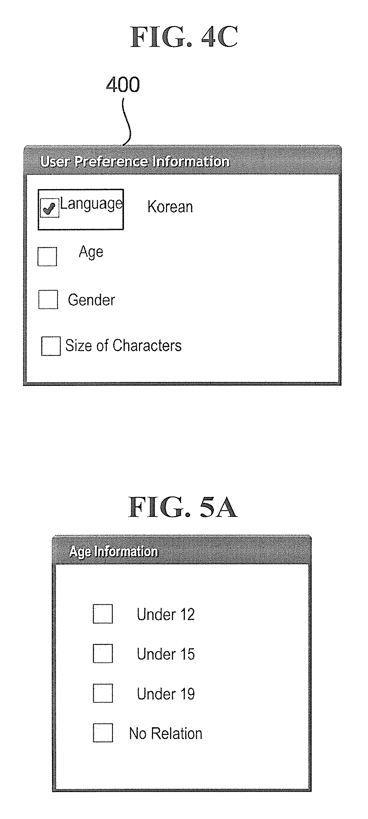

For example, Figure 4A illustrates a user interface 400 that represent information about the user's preferences, and the user interface 400 represents a 'language,' an 'age,' a 'gender,' and the 'size of characters' as an example. If, in Figure 4B, a user selects a 'language' from information about the user's preferences, a lower-class user interface 410 with respect to 'information about a language' is provided to the user, so that the user can select a desired language. Thereafter, as in Figure 4C, information about the user's preference of a 'language' may be set to 'Korean'. In the same manner, information about the user's preferences of 'age', a 'gender' and the 'size of characters' may be set.

The set information about the user' preferences may be stored in the memory unit 340 of the apparatus 300.

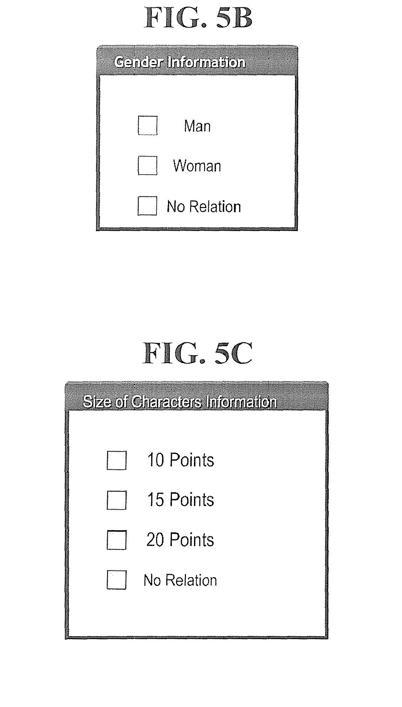

Figures 5A to 5C are diagrams showing examples of information about a user's preferences according to an embodiment of the present invention. Figure 5A illustrates an example of information about the user's preference of an 'age', Figure 5B illustrates an example of information about the user's preference of a 'gender', and Figure 5C illustrates an example of information about the user's preference of the 'size of characters.'

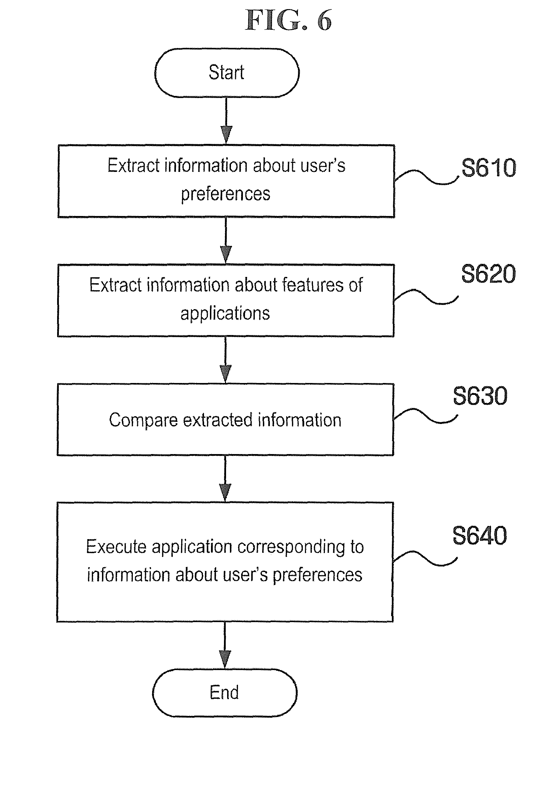

Figure 6 is a flowchart illustrating a method of providing applications according to an embodiment of the present invention.

First, information about the user's preferences previously stored in the memory unit 340 is extracted by the application control unit 334 at operation S610, information about an application is extracted from the broadcast stream received by the application provision apparatus 300 at operation S620.

Thereafter, upon comparing the two pieces of extracted information to each other at operation S630, the application control unit 334 executes an application when the application corresponding to the extracted information about the user's preferences exists in the extracted information about an application at operation S640.

Meanwhile, although describing a digital broadcasting receiver, such as a set-top box, as an example, the present invention may be applied to a device for playing storage media, such as a DVD player.

That is, in the case where a plurality of applications having different features has been stored on a DVD, only a specific application is separately stored in the memory of the DVD player based on information about a user' preferences, which is stored in the memory of the DVD player and is previously stored by the user, so that, when the user selects the application, the application can be intermediately performed. Accordingly, only the application selected based on information about the user's preferences is stored in the memory thereof without storing all the applications in the memory of the DVD player, so that the system resources of the DVD player can be saved.

In accordance with the present invention, a corresponding application is automatically executed based on the information about a user's preferences previously set by a user, so that the user's preferences can be satisfied and system resources for executing applications can be saved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for providing applications, comprising:
a receiving unit (310) which receives a plurality of applications having different features;
a memory unit (340) which stores information about a user's preferences of features preset by the user; and
an application control unit (334) which selects an application from the plurality of applications, and which executes the selected application;
wherein said application has features corresponding to the information about the user's preferences.

2. An apparatus as claimed in claim 1, wherein the information about the user's preferences comprises information about a language provided when an application is executed.

3. An apparatus as claimed in claim 1 or 2, wherein the information about the user's preferences comprises information about an age of a user.

4. The apparatus as claimed in claim 1, 2 or 3, wherein the information about the user's preferences comprises information about a gender of a user.

5. The apparatus as claimed in claim 1, 2, 3 or 4, wherein the information about the user's preferences comprises information about a size of characters provided when an application is executed.

6. The apparatus as claimed in any of claims 1 to 5, wherein the plurality of applications is received through a broadcast stream.

7. The apparatus as claimed in any of claims 1 to 5, wherein the plurality of applications is received through a storage medium.

8. An apparatus as claimed in any preceding claim, wherein the application control unit (334) stores the selected application in the memory unit (340).

9. A method of providing applications, comprising:
receiving a plurality of applications having different features;
extracting information about a user's preferences of features preset by the user;
selecting an application from the plurality of received applications; and
executing the selected application;
wherein the selected application has features corresponding to the extracted information about the user's preferences.

10. The method as claimed in claim 9, wherein the information about the user's preferences comprises information about a language provided when an application is executed.

11. The method as claimed in claim 9 or 10, wherein the information about the user's preference comprises information about an age of a user.

12. The method as claimed in claim 9, 10 or 11, wherein the information about the user's preferences comprises information about a gender of a user.

13. The method as claimed in claim 9, 10, 11 or 12, wherein the information about the user's preferences comprises information about a size of characters provided when an application is executed.

14. The method as claimed in any of claims 9 to 13, wherein receiving comprises receiving the plurality of applications through a broadcast stream.

15. The method as claimed in any of claims 9 to 13, wherein receiving comprises receiving the plurality of applications through a storage medium.

16. The method as claimed in any of claims 9 to 15, further comprising storing the selected application.
